(19) Europäisches Patentamt
European Patent Office
Office européen des brevets

(11) **EP 2 915 005 B1**

(12) **FASCICULE DE BREVET EUROPEEN**

(45) Date de publication et mention
de la délivrance du brevet:
**16.09.2020 Bulletin 2020/38**

(21) Numéro de dépôt: **13801634.0**

(22) Date de dépôt: **31.10.2013**

(51) Int Cl.:
*G02F 1/1334* ^(2006.01)        *B32B 17/10* ^(2006.01)
*C09K 19/54* ^(2006.01)        *E06B 3/67* ^(2006.01)
*G02B 5/20* ^(2006.01)         *G02B 5/22* ^(2006.01)

(86) Numéro de dépôt international:
**PCT/FR2013/052607**

(87) Numéro de publication internationale:
**WO 2014/068257 (08.05.2014 Gazette 2014/19)**

(54) **VITRAGE COMPRENANT UN SYSTÈME À DIFFUSION LUMINEUSE VARIABLE ET UNE PAIRE D'ÉLÉMENTS ABSORBANTS**

VERGLASUNG MIT EINEM VERÄNDERLICHEN LICHTSTREUUNGSSYSTEM UND EINEM PAAR VON ABSORBERN

GLAZING COMPRISING A VARIABLE LIGHT DIFFUSION SYSTEM AND A PAIR OF ABSORBERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2012 FR 1260426**

(43) Date de publication de la demande:
**09.09.2015 Bulletin 2015/37**

(73) Titulaire: **SAINT-GOBAIN GLASS FRANCE
92400 Courbevoie (FR)**

(72) Inventeurs:
• **GAYOUT, Patrick
93250 Villemomble (FR)**
• **MIMOUN, Emmanuel
92100 Boulogne-Billancourt (FR)**

(74) Mandataire: **Saint-Gobain Recherche
Département Propriété Industrielle
39 Quai Lucien Lefranc
93300 Aubervilliers (FR)**

(56) Documents cités:
WO-A1-03/007060        WO-A1-2012/028823
US-A- 5 976 405        US-A- 6 005 651

**Description**

L'invention concerne un vitrage comprenant au moins un substrat revêtu d'un système à diffusion lumineuse variable commutant entre un état transparent et un état translucide comprenant une couche diffusante susceptible de diffuser la lumière incidente selon des angles de diffusion supérieurs à l'angle critique de réflexion totale interne à l'interface entre le substrat et l'air.

L'invention concerne également un procédé de projection ou de rétroprojection dans lequel on utilise ledit vitrage comme écran de projection ou de rétroprojection.

L'invention vise plus particulièrement le domaine des vitrages permettant la projection d'image, des vitrages occultant et des vitrages commutables entre un état diffusant et un état transparent.

Les vitrages de l'invention présentent un pouvoir cachant à l'état diffusant grandement amélioré ainsi que d'excellentes propriétés optiques. Le pouvoir cachant d'un vitrage à l'état diffusant correspond à sa capacité à ne pas permettre la vision au travers. La qualité de l'état transparent ainsi que la netteté de l'image en projection directe sont améliorées par rapport à des vitrages comprenant les mêmes couches diffusantes car le halo de diffusion résiduel habituellement visible sur ce type de vitrage est réduit. Enfin, ces vitrages présentent un état transparent d'aspect comparable à l'état transparent des vitrages de l'état de la technique antérieur mais en utilisant une tension de commutation plus faible.

On entend par « angle critique de réflexion total interne », l'angle au-dessus duquel tout rayon lumineux arrivant sur une surface de séparation ou interface depuis un milieu d'indice optique plus élevé vers un milieu d'indice optique moins élevé avec un angle d'incidence supérieur à une valeur dite critique est réfléchi par ladite surface ou interface. L'angle critique ($\theta$c) peut être déterminé en appliquant l'équation de Snell-Descartes et en remplaçant l'angle de réfraction par 90 °. L'angle critique ($\theta$c) de réflexion totale interne à l'interface entre un substrat et l'air dont les indices de réfraction satisfont la relation $n_{substrat} > n_{air}$ est :

$$\theta c = \sin^{-1}(\frac{nair}{nsubstrat})$$

Par exemple, l'angle critique de réflexion totale interne à l'interface entre un substrat de verre d'indice de réfraction de 1,54 et l'air est d'environ 40 °.

Les vitrages commutables entre un état transparent et un état diffusant actuellement disponibles dans le commerce comprennent un film fonctionnel constitué de deux supports porteurs d'électrode sous forme de feuilles plastiques encadrant une couche incorporant des gouttelettes de cristaux liquides, le tout feuilleté par l'intermédiaire d'intercalaires ou collé entre deux substrats de verre. Les cristaux liquides, quand le film est mis sous tension (Etat ON), s'orientent selon un axe privilégié, ce qui autorise la vision à travers le film fonctionnel. Hors tension (Etat OFF), en l'absence d'alignement dans les gouttelettes de cristaux liquides, le film devient diffusant et empêche la vision.

Les vitrages commutables actuellement disponibles dans le commerce, lorsqu'ils comprennent par exemple une couche NCAP (« nematic curvilinear aligned phase ») présentant des microgouttelettes de 5 $\mu$m de dimension moyenne, permettent une projection directe peu lumineuse mais nette, bien résolue et non flou. D'autre part, la réflexion diffuse de ces vitrages, est faible à l'état transparent et l'impression visuelle est bonne. En revanche, les vitrages incorporant ces films fonctionnels présentent un pouvoir cachant limité.

Le demandeur a développé des vitrages commutables comprenant des cristaux liquides n'utilisant pas la technologie des films fonctionnels. Ces vitrages commutables comprennent une couche diffusante directement encapsulée entre deux substrats de préférence verriers et non comprise entre deux supports porteurs d'électrode sous forme de feuilles plastiques. L'ensemble constitué par les substrats et la couche diffusante est scellé par l'intermédiaire d'un joint de scellement ou cordon de colle périphérique. Les demandes de brevet WO 2012/028823 et WO 2012/045973 décrivent de tels vitrages. L'utilisation de cette technique permet de fabriquer des vitrages moins chers en économisant sur les matériaux employés.

Les vitrages commutables développés par le demandeur comprennent une couche diffusante comprenant une multitude de gouttelettes de cristaux liquides sans orientations préférentielles entre elles dispersées dans une matrice polymère (ci-après couche PDLC, « Polymer-Dispersed Liquid Cristal »). Les gouttelettes présentent des dimensions moyennes inférieures à 4 $\mu$m.

De manière surprenante, ces vitrages présentent un bon pouvoir cachant ainsi qu'une meilleure qualité en vision normale à l'état transparent et ce à moindre coût. En revanche, ces vitrages présentent des inconvénients non négligeables. On observe notamment la présence d'un halo lumineux à l'état diffusant particulièrement gênant en cas de projection directe et une apparence dégradée en angle à l'état transparent. Cette apparence dégradée est caractérisée par la présence d'un voile blanc, attribué à de la réflexion lumineuse diffuse au niveau des gouttelettes de cristaux liquides.

Afin d'expliquer les différences observées, le demandeur s'est intéressé aux mécanismes régissant ces vitrages complexes.

Les couches diffusantes comprenant comme diffuseurs des particules dispersées dans une matrice diffusent différemment la lumière selon la taille et la densité des particules qu'elles contiennent. L'invention s'intéresse aux couches diffusantes comprenant des diffuseurs dispersés dans un volume présentant des dimensions et une densité telles que la lumière traversant ce milieu subit une diffusion de Mie. Pour observer ce phénomène, la taille des particules doit être plus grande que les longueurs d'onde du visible, typiquement d'un ou de quelques micromètres.

Lorsque l'on éclaire en incidence normale ce type de couche diffusante, la répartition spatiale de la lumière diffusée en transmission n'est pas isotrope et dépend fortement de la forme des diffuseurs (particules sous forme de sphère, cylindre, plaquette,..), de leur taille et de leur densité.

Il est possible pour une couche diffusante donnée de déterminer son indicatrice de diffusion en transmission. Cela consiste à éclairer la couche diffusante en incidence normale et à mesurer en transmission l'intensité des rayons diffusés en fonction de l'angle par rapport à la direction initiale de l'éclairement. Cette indicatrice de diffusion peut être mesurée grâce à un appareil mesurant la distribution de transmission bi-directionnelle ou BTDF (« Bidirectional transmission distribution function ») tel que le banc REFLET de la société STIL. Cette indicatrice est obtenue en mesurant la lumière transmise sur un arc de -90 ° à 90° dans l'hémisphère opposé à celui de la lumière incidente, et constitue une courbe en forme de pic. On entend donc par « pic de diffusion », le profil d'intensité des rayons de lumière diffusés par les moyens diffusants en transmission. Les informations que l'on peut extraire de ces indicatrices de diffusion résultent de la hauteur du sommet du pic, de la forme et de la largeur de la base du pic. Le sommet du pic centré sur 0 ° correspond à l'angle d'incidence normal auquel sort la lumière qui n'a pas été diffusée.

Parmi les couches diffusantes dont la diffusion s'explique par la diffusion de Mie, une distinction doit être faite.

Lorsque la couche diffusante comprend des grosses particules, c'est-à-dire des particules présentant une dimension moyenne d'environ 5 $\mu$m ou plus, l'indicatrice de diffusion à la forme d'un pic quasi-triangulaire. La demi-largeur de la base du triangle correspond à l'angle limite (en valeur absolue) au-delà duquel quasiment aucun rayon n'est diffusé ($\theta_{limite}$). On considère alors que l'indicatrice de diffusion en transmission est très pointée vers l'avant.

Prenons le cas où une couche diffusante de ce type est déposée sur un substrat. Le rayonnement incident arrive tout d'abord sur la couche diffusante, y est diffusé et arrive ensuite dans le substrat. Dans la mesure où les rayons ne sont pas diffusés à des angles supérieurs à l'angle de réflexion totale interne entre l'interface du substrat et de l'air ($\theta_{limite} < \theta c$), plus de 95 % des rayons diffusés peuvent sortir du substrat, typiquement 96 %.

L'analyse des indicatrices de diffusion en transmission permet de mettre en évidence que lorsque la couche diffusante comprend des particules de dimension et de densité telles que le profil de diffusion est pointé vers l'avant, quasiment aucun rayon n'est diffusé à des angles supérieurs à une valeur limite. Lorsque cette valeur limite d'angle est inférieure à l'angle critique de réflexion totale interne du substrat, on n'observe pas de réflexion diffuse. Or, c'est la réflexion diffuse qui est susceptible de générer un halo gênant la netteté dans le cas d'une projection directe sur un vitrage incorporant une telle couche diffusante. En revanche, la faiblesse de la déviation angulaire moyenne des rayons qui traverse le vitrage par rapport à leur direction initiale se traduit par un faible pouvoir cachant.

Par opposition, lorsque la couche diffusante comprend des particules plus petites, c'est-à-dire avec une dimension moyenne inférieure à 4 $\mu$m. L'indicatrice de diffusion n'a pas une forme de pic quasi-triangulaire. L'indicatrice de diffusion peut se découper en deux parties principales. On obtient un pic se superposant à une courbe que l'on appelle « le fond » présentant une forme de cloche. Dans ce cas, des rayons peuvent être diffusés aux grands angles. On considère alors que l'indicatrice de diffusion en transmission est moins pointée vers l'avant.

Prenons le cas où une couche diffusante de ce type est encapsulée entre deux substrats. Le rayonnement incident arrive tout d'abord sur le premier substrat, puis sur la couche diffusante, y est diffusé et arrive ensuite dans le deuxième substrat. Dans la mesure où certains rayons peuvent être diffusés à des angles supérieurs à l'angle critique de réflexion totale interne du substrat ($\theta_{limite} > \theta c$), ces rayons ne peuvent pas sortir du deuxième substrat et sont alors piégés. Ces rayons retraversent la couche diffusante et sont donc à nouveau diffusés. Ces rayons peuvent alors ressortir du premier substrat, en se faisant diffuser à nouveau si leur angle d'incidence est inférieur à l'angle critique de réflexion totale interne de l'interface entre l'air et le premier substrat. Dans le cas contraire, ces rayons sont à nouveau réfléchis et retraversent la couche diffusante. Selon leur angle d'incidence ces rayons pourront ou non ressortir du deuxième substrat après une diffusion favorable. Les rayons piégés par réflexion totale interne sont donc susceptibles de revenir à l'observateur, notamment après un certain nombre de réflexion si la couche diffusante est encadrée par plusieurs substrats. C'est ce phénomène qui crée l'effet de halo ou voile blanc car ces rayons ressortent à un endroit différent du substrat.

La problématique exposée ci-dessus concernant le piégeage par réflexion totale interne ne se pose que si les diffuseurs ont une dimension moyenne telle que des rayons sont diffusés à des angles supérieurs à l'angle critique de réflexion totale interne. En général, les diffuseurs ont dans ce cas une dimension moyenne inférieure à 4 $\mu$m et mieux inférieure à 2 $\mu$m.

L'analyse des indicatrices de diffusion en transmission permet de mettre en évidence que lorsque la couche diffusante présente un profil de diffusion peu pointé vers l'avant, la plus grande déviation angulaire moyenne des rayons qui traverse le vitrage par rapport à leur direction initiale semble permettre d'obtenir un meilleur pouvoir cachant. Or, dans ce cas une partie non négligeable des rayons diffusés est piégée à l'intérieur du verre par réflexion totale interne. Cette réflexion diffuse est susceptible de générer un halo gênant la netteté dans le cas d'une projection directe sur un vitrage incorporant une telle couche diffusante.

A ce phénomène observé à l'état diffusant s'ajoute l'influence de la dépendance angulaire à l'état transparent des cristaux liquides.

L'indice de réfraction ordinaire des cristaux liquides est proche de l'indice de réfraction de la matrice polymère dans laquelle sont dispersées les gouttelettes de cristaux liquides. La couche diffusante apparait « plus transparente » lorsqu'on l'observe dans la direction du champ qui est en général normale à la surface du vitrage. En revanche, lorsque le vitrage est éclairé avec un fort angle d'incidence, le saut d'indice des cristaux liquides joue un rôle. Certains rayons sont diffusés en transmission. La transparence diminue et donne lieu à une augmentation de la réflexion diffuse pour des angles de vue obliques. Ce phénomène s'explique par le fait que lorsque l'angle de vue s'éloigne de la normale, la non-concordance entre l'indice de réfraction effectif des cristaux liquides et l'indice de réfraction de la matrice peut être perçu.

Dans le cas d'une couche où l'indicatrice de diffusion est pointée vers l'avant, ces rayons diffusés peuvent sortir du vitrage. La réflexion diffuse est donc faible.

Dans le cas d'un vitrage à plus large indicatrice de diffusion, des rayons présentant une incidence plus ou moins oblique sont susceptibles de « voir » les cristaux liquides à l'état transparent et d'être diffusés. Ces rayons diffusés engendre le même phénomène qu'expliqué ci-dessus. Ces rayons peuvent être piégés par réflexion totale interne et ce d'autant plus facilement que les angles d'incidence sont importants. Ces rayons pourront alors ressortir après une diffusion favorable et générer un halo lumineux ou voile blanc sur le vitrage vu sous grand angle d'incidence. On observe donc une apparence dégradée en angle à l'état transparent du fait de la réflexion diffuse élevée.

Pour ces vitrages commutables, les cristaux liquides sont d'autant mieux ordonnés que la tension appliquée est élevée et proche de la tension de commutation. Selon l'invention, on entend par tension de commutation, la tension continue ou efficace d'un signal sinusoïdal à partir de laquelle on obtient des valeurs de flou mesurées selon la norme ASTM D 1003 inférieures à 5%.

La tension de commutation correspond donc à une tension minimale d'utilisation pour avoir un faible flou. Le flou (« haze ») correspond à la quantité de la lumière transmise qui est diffusée à des angles de plus de 2,5°. Les cristaux liquides sont d'autant mieux ordonnés (donc moins flou) que la tension appliquée est élevée. Lorsque la tension appliquée est insuffisante, les cristaux liquides ne sont pas suffisamment alignés et la diffusion par la couche diffusante est importante. Le voile blanc sur le vitrage est alors visible. Ce voile blanc est la principale cause d'impression de non-transparence pour des niveaux de diffusion faible.

Les propriétés optiques des vitrages comprenant une couche diffusante au contact d'un substrat dépendent fortement des diffuseurs contenus dans la couche diffusante et du substrat. Les rayons diffusés par la couche diffusante à l'état diffusant ou par la couche diffusante à l'état transparent sous incidence oblique, traversent le substrat qui présente un indice de réfraction plus élevé que l'air. Lorsque ces rayons diffusés arrivent à l'interface entre le substrat et l'air, ils ne peuvent sortir que si leur angle d'incidence est inférieur à l'angle critique de réflexion totale interne. Selon le choix de la couche diffusante, une partie importante de la lumière peut être diffusée aux grands angles. Or, tout rayon diffusé dans un substrat avec un angle supérieur à l'angle de réflexion totale interne peut être piégé dans celui-ci et nuire aux propriétés optiques du vitrage.

L'objectif de l'invention est donc de prévenir les inconvénients ci-dessus mentionnés en améliorant les propriétés optiques des vitrages comprenant une couche diffusante susceptible de diffuser la lumière incidente selon des angles de diffusion supérieurs à l'angle critique de réflexion totale interne à l'interface entre le substrat et l'air. De préférence, une couche diffusante satisfait ce critère si une quantité significative de la lumière incidente est diffusée selon des angles de diffusion supérieurs à l'angle critique de réflexion totale interne à l'interface entre le substrat et l'air, de préférence au moins 5 % de la lumière incidente est ainsi diffusée.

Le demandeur a découvert que l'ajout d'éléments absorbants dans le visible, de part et d'autre d'une couche diffusante telle que définie ci-dessus, permet de remédier, voire de totalement éliminer les inconvénients liés à la réflexion diffuse due aux réflexions totales internes.

La présence de tels éléments absorbants permet d'obtenir une atténuation de la réflexion diffuse beaucoup plus importante pour les réflexions multiples dans le substrat que pour la transmission lumineuse. L'amélioration concerne aussi bien l'état transparent pour lequel la réflexion diffuse résiduelle est diminuée que l'état diffusant pour lequel la qualité de la projection directe est améliorée lorsque le vitrage est utilisé comme écran.

La réduction de la réflexion diffuse obtenue permet de compenser le surplus de réflexion diffuse engendré par l'application d'une tension plus faible au vitrage. Ainsi, on peut obtenir une impression de transparence similaire à celle obtenue avec les vitrages comprenant une couche diffusant aux grands angles mais n'incorporant pas lesdits éléments absorbants en appliquant une tension plus faible.

La présente invention concerne un vitrage comprenant un système à diffusion lumineuse variable tel que présenté dans la revendication 1 ainsi que l'utilisation dudit vitrage telle que présentée dans la revendication 19. D'autres aspects de l'invention sont présentés dans les revendications dépendantes.

Bien que la description fasse souvent référence aux mode de réalisation de l'invention et à l'invention, il convient de noter que l'invention est définie par les revendications et que les modes de réalisation de l'invention sont uniquement ceux qui comprennent au moins toutes les caractéristiques techniques de la revendication indépendante 1.

Selon l'invention, le terme « système à diffusion lumineuse variable » inclut la couche diffusante et les deux électrodes situées de chaque côté de la couche diffusante et le terme « vitrage » inclut au moins les substrats porteurs desdites électrodes et le système à diffusion lumineuse variable.

Selon l'invention, les éléments sont choisis parmi les substrats, les revêtements et/ou les couches.

Par « élément absorbant la lumière visible », on entend un élément qui a pour fonction d'augmenter l'absorption énergétique de la lumière visible, c'est-à-dire dans la gamme de longueur d'onde allant de 380 à 780 nm. L'absorption énergétique est mesurée selon la norme EN 410.

Par ordre de préférence croissant, le vitrage présente une absorption énergétique supérieure à 10%, supérieure à 20 %, supérieure à 30%, supérieure à 40%. Cependant, le choix d'un élément absorbant présentant une absorption énergétique plus ou moins élevée pourra être fonction des propriétés recherchées. Un compromis est parfois nécessaire entre le maintien d'une transmission lumineuse suffisante et la réduction du voile lumineux.

Selon l'invention, le vitrage comprend au moins une paire d'éléments absorbants la lumière visible.

De préférence, les éléments absorbants d'une même paire sont identiques. Par « éléments absorbants identiques », on entend des substrats absorbants de même nature chimique et de même épaisseur.

De préférence, le vitrage de l'invention présente une symétrie par rapport au système à diffusion lumineuse variable et/ou à la couche diffusante. Un vitrage présentant « une symétrie » selon l'invention comporte des paires d'éléments identiques dont les éléments identiques d'une même paire sont placés symétriquement par rapport au système à diffusion lumineuse variable et/ou à la couche diffusante.

Par « éléments identiques », on entend des substrats, revêtements et/ou couches de même nature chimique et de même épaisseur.

La couche diffusante et l'élément absorbant dans le visible sont en contact optique, c'est-à-dire qu'ils ne sont pas séparés par un milieu ou élément présentant une variation d'indice de réfraction par rapport au substrat ou à la matrice polymère de la couche diffusante supérieure à 0,1.

Le vitrage comprend un système à diffusion lumineuse variable comprenant une couche diffusante susceptible de commuter entre un état transparent et un état diffusant de préférence électrocommandable.

Les procédés de préparation des couches PDLC comprennent une étape de séparation de phase pour former les gouttelettes de cristaux liquides dispersées dans la matrice polymère. La nature, la concentration des composants dans la composition précurseur de la couche PDLC, la température et les conditions opératoires notamment la cinétique de polymérisation influent sur la morphologie des microgouttelettes obtenues et détermine notamment leur taille, leur forme, leur pureté et éventuellement leur interconnexion (porosité ouverte ou fermée).

La couche diffusante comprenant les cristaux liquides a, par ordre de préférence croissant, une épaisseur de 3 à 50 $\mu$m, de 5 à 25 $\mu$m, de 10 à 20 $\mu$m ou de 12 à 17 $\mu$m.

Les microgouttelettes de cristaux liquides présentent, par ordre de préférence croissant, une dimension moyenne comprise entre 0,25 $\mu$m et 3,00 $\mu$m, entre 1,00 et 2,50 $\mu$m, entre 0,50 et 2,00 $\mu$m ou entre 0,70 et 1,00 $\mu$m (bornes incluses).

Une couche diffusante comprenant des cristaux liquides peut être obtenue par préparation d'une composition précurseur comprenant un mélange de cristaux liquides et une composition photopolymérisable. Cette composition précurseur est appliquée sous forme de « couche » au contact de deux substrats porteurs d'électrode. Pendant la polymérisation ou réticulation par irradiation à la lumière UV de ladite composition précurseur, il se forme une matrice polymère dans laquelle les cristaux liquides sont incorporés sous formes de microgouttelettes. La couche diffusante est donc obtenue par une étape de séparation de phase induite par photopolymérisation radicalaire.

Les cristaux liquides sont de préférence nématiques à anisotropie diélectrique positive. Des exemples de cristaux liquides et de mélange de cristaux liquides convenant selon l'invention sont décrits notamment dans les brevets EP 0 564 869 et EP 0 598 086.

A titre de mélange de cristaux liquides convenant tout particulièrement selon l'invention, on peut utiliser le produit commercialisé par la société Merck sous la référence MDA-00-3506 comprenant un mélange de de 4-((4-éthyl-2,6-difluorophényl)-éthinyl)-4'-propylbiphényle et de 2-fluoro-4,4'-bis(trans-4-propylcyclohexyl)-biphényle.

La matrice polymère peut comprendre un polymère ou copolymère choisi parmi les polyéthers, les polyuréthanes, les alcools polyvinylique (PVA), les polyesters, les polyacrylates et les polyméthacrylates.

De préférence, la matrice polymère est obtenue à partir d'une composition photopolymérisable et comprend des composés susceptibles de polymériser ou de réticuler par voie radicalaire sous l'action d'un rayonnement de préférence UV. Cette composition photopolymérisable comprend des monomères, oligomères et/ou prépolymères et un initiateur de polymérisation.

Selon un mode de réalisation avantageux, la matrice polymère est obtenue à partir d'une composition photopolymérisable comprenant des composés vinyliques. Par « composé vinylique », on entend au sens de la présente invention un monomère, un oligomère, un pré-polymère, un polymère comprenant au moins une fonction vinyle $CH_2=CH-$ qui, lorsqu'il est soumis aux conditions de photopolymérisation, donne un réseau polymère doté d'une structure solide. Selon l'invention, le terme composé vinylique inclut les composés acrylates et méthacrylates comprenant au moins une fonction ($CH_2=CH-CO-O-$) ou ($CH_2=C(CH_3)-CO-O-$).

La composition photopolymérisable selon l'invention comprend de préférence à titre de composés vinylique des composés acrylates et/ou méthacrylates (ci-après (méth)acrylates). Le choix spécifique de ce type de matériau polymère permet d'obtenir lors de la réticulation une bonne séparation de phase. Cela conduit à une couche diffusante présentant des gouttelettes dont la dimension est uniforme même pour des dimensions faibles notamment de l'ordre du micromètre et dont la densité est élevée. De plus, les cristaux liquides sont bien répartis dans les gouttelettes et non dispersés isolement dans la matrice polymère. Une telle couche diffusante diffuse la lumière incidente selon des angles de diffusion supérieurs à l'angle critique de réflexion totale interne à l'interface entre le substrat et l'air.

Les composées (méth)acrylate utilisés selon l'invention peuvent être choisis parmi les (méth)acrylates monofonctionnels et polyfonctionnels tels que les (méth)acrylates mono-, di-, tri-, poly-fonctionnels. Des composés vinyliques convenant selon la présente invention sont par exemple décrits dans le brevet EP 0272 585 notamment des oligomères acrylates.

Avantageusement, la composition photopolymérisable comprend, en masse par rapport à la masse totale de la composition photopolymérisable, par ordre de préférence croissant, au moins 50 %, au moins 60 %, au moins 70 %, au moins 80 %, au moins 90 %, au moins 95 % de composés vinyliques.

Dans la mesure où aucun solvant n'est utilisé, la matrice polymère une fois réticulée comprendra donc au moins 50 % de polymère obtenu par polymérisation des composés vinyliques. De préférence, la matrice polymère comprend par ordre de préférence croissant, en masse par rapport à la masse totale de la matrice polymère, au moins 60 %, au moins 70 %, au moins 80 %, au moins 90 %, au moins 92 %, au moins 95 % de polymères obtenus par polymérisation des composés vinylique.

Selon un mode de réalisation, la composition photopolymérisable comprenant des composés vinyliques comprend, en masse par rapport à la masse totale de la composition photopolymérisable, par ordre de préférence croissant, au moins 50%, au moins 60%, au moins 70%, au moins 80%, au moins 90%, au moins 95% de composés acrylates et/ou de composés méthacrylates.

La composition photopolymérisable peut comprendre en outre 0,01 à 5% d'un photoinitateur en masse par rapport à la masse totale de la composition photopolymérisable. A titre de photoinitiateurs convenant selon l'invention, on peut citer 2,2-diméthoxy-1,2-diphényléthanone.

La composition polymérisable peut comporter d'autres co-monomères polymérisables tels que des mercaptans.

On peut citer comme exemple de composition photopolymérisable, une composition obtenue à partir du produit MXM 035 vendu par Nematel. Ce produit comprend :

- un mélange de deux monomères acrylates, l'éthylhexylacrylate et l'hexanediol diacrylate et d'oligomères acrylates,
- un mercaptan,
- un photoinitiateur.

D'autres exemples de compositions à base d'acrylates et de mercaptans sont décrits dans les brevets US 4,891,152, EP 0564869 et EP 0 598 086.

Selon un mode de réalisation avantageux, la couche diffusante est une couche PDLC satisfaisant les caractéristiques suivantes seules ou en combinaison :

- la matrice polymère est obtenue à partir d'une composition photopolymérisable comprenant des composés vinyliques, de préférence des composés acrylates ou des composés méthacrylates, et/ou

- les proportions en masse du mélange de cristaux liquides par rapport à la masse totale du mélange de cristaux liquides et de composition photopolymérisable sont comprises entre 40 et 70%, de préférence entre 50 et 65 %, et/ou

- la couche PDLC a une épaisseur comprise entre 5 et 25 $\mu$m, de préférence entre 10 et 30 $\mu$m, mieux entre 10 et 20 $\mu$m ou entre 12 à 17 $\mu$m, et/ou

- le diamètre moyen des gouttelettes de cristaux liquides dispersées dans la matrice polymère est compris entre 0,25 $\mu$m et 2,00 $\mu$m, de préférence entre 0,70 et 1,00 $\mu$m.

Une couche PDLC présentant la combinaison de ces caractéristiques présente un excellent pouvoir cachant.

La dimension moyenne des gouttelettes et les proportions relatives en masse du mélange de cristaux liquides par rapport à la composition photopolymérisable peuvent être indirectement corrélées à la densité des gouttelettes dans la couche PDLC (en admettant que très peu de cristaux liquides sont dissous dans la matrice polymère).

La couche diffusante peut comprendre en outre des espaceurs. Les espaceurs peuvent être en verre tels que des billes de verre ou en matière plastique dure par exemple en polyméthacrylate de méthyle (PMMA) ou en polymère de divinylbenzène. Ces espaceurs sont de préférence transparents et de préférence présentent un indice optique sensiblement égal à l'indice de réfraction de la matrice polymère. Les espaceurs sont en matériau non-conducteur.

Un procédé d'encapsulation entre deux verres avec électrodes d'une couche diffusante comprenant des cristaux liquide dans un matériau polymère est décrit dans la demande WO 2012/045973.

Le système à diffusion lumineuse variable peut s'étendre sur toute la surface du vitrage ou sur au moins une partie du vitrage.

La couche diffusante est située entre deux d'électrodes, les électrodes étant en contact direct avec la couche diffusante. Les électrodes comprennent au moins une couche électroconductrice.

La couche électroconductrice peut comprendre des oxydes conducteurs transparents (TCO), c'est-à-dire des matériaux qui sont à la fois bon conducteurs et transparents dans le visible, tels que l'oxyde d'indium dopé à l'étain (ITO), l'oxyde d'étain dopé à l'antimoine ou au fluor ($SnO_2$ : F) ou l'oxyde de zinc dopé à l'aluminium (ZnO: Al). Une couche électroconductrice à base d'ITO présente une résistance surfacique de 50 à 200 ohms par carré.

Ces couches électroconductrices à base d'oxydes conducteurs sont de préférence déposées sur des épaisseurs de l'ordre de 50 à 100 nm.

La couche électroconductrice peut également être une couche métallique, de préférence une couche mince ou un empilement de couches minces, dites TCC (pour « Transparent conductive coating » en anglais) par exemple en Ag, Al, Pd, Cu, Pd, Pt In, Mo, Au et typiquement d'épaisseur entre 2 et 50 nm.

Ces couches électroconductrices peuvent être déposées directement sur un substrat ou sur une couche intermédiaire d'un substrat, par un grand nombre de techniques connues telles que la pulvérisation cathodique assistée par un champ magnétique, l'évaporation, la technique sol-gel, ainsi que des techniques de dépôt en phase vapeur (CVD).

Les électrodes comprenant une couche électroconductrice sont connectées à une alimentation en énergie. Les électrodes peuvent alors être déposées directement sur une face d'un substrat et ainsi former les substrats porteurs d'électrode.

Les éléments absorbants dans le visible, situés de part et d'autre d'une couche diffusante sont superposés aux couches électroconductrices des électrodes situées de part et d'autre de la couche diffusante. Les éléments absorbants tels que les substrats, les revêtements et/ou les couches situés de part et d'autre d'une couche diffusante sont donc situés au-dessus ou en-dessous de la couche électroconductrice de l'électrode située du même côté par rapport à la couche diffusante.

Le vitrage comprend deux substrats porteurs d'électrodes et peut comprendre en outre d'autres substrats éventuellement feuilletés avec les substrats porteurs d'électrodes. Le ou les substrats, porteurs d'électrodes ou autres, peuvent être choisis rigides, semi-rigides ou flexibles, minéraux ou organiques, par exemple être en verre ou en polymère.

Les substrats en verre peuvent être choisis parmi les substrats en verre commercialisés par la société Saint-Gobain Glass dans la gamme DIAMANT® ou Planilux®. Les substrats en verre ont de préférence une épaisseur comprise entre 0,4 et 12 mm, de préférence 0,7 et 6 mm.

Les substrats en polymère peuvent comprendre des polymères choisis parmi :

- les polyesters tels que le polyéthylène téréphtalate (PET), le polybutylène téréphtalate (PBT), le polyéthylène naphtalate (PEN) ;

- les polyacrylates tels que le polyméthacrylate de méthyle (PMMA) ;

- les polycarbonates ;

- les polyuréthanes ;

- les polyamides ;

- les polyimides ;

- les polymères fluorés comme les fluoroesters tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ;

- les résines photoréticulables et/ou photopolymérisables, telles que les résines thiolène, polyuréthane, uréthane-acrylate, polyester-acrylate et

- les polythiouréthanes.

Les substrats peuvent être feuilletés entre eux grâce à l'utilisation d'intercalaires en matière plastique thermoformable ou sensible à la pression. Ces intercalaires peuvent être à base de polymères choisis parmi les polybutyrales de vinyle (PVB), les polychlorures de vinyle (PVC), les polyuréthanes (PU), les polyéthylènes téréphtalate ou les éthylènes vinyle acétate (EVA). Les intercalaire ont de préférence une épaisseur comprise entre 10 μm et 2 mm, de préférence comprise entre 0,3 et 1 mm.

Les substrats porteurs d'électrodes sont de préférence des substrats en verre, par exemple des feuilles de verre plat flotté.

L'élément absorbant dans le visible peut être un substrat absorbant, une couche absorbante et/ou un revêtement absorbant.

Les substrats absorbants peuvent être choisis parmi :

- les substrats teinté dans la masse,

- les substrats comprenant un revêtement absorbant.

Les substrats absorbants peuvent être en verre ou en polymère, rigides ou flexibles.

A titre de substrat absorbant en verre teinté dans la masse par des colorants appropriés, on peut tout particulièrement utiliser la gamme des verres commercialisés sous la dénomination PARSOL® par la société SAINT-GOBAIN GLASS. Ces verres teintés dans la masse présentent avantageusement l'une ou plusieurs des caractéristiques suivantes :

- une transmission lumineuse d'au moins 50% mesuré selon la norme EN 410,
- une absorption énergétique d'au moins 10% mesuré selon la norme EN 410.

A titre de substrat absorbant en polymère teinté dans la masse, on peut citer les substrats thermoplastiques de type de feuille qu'on utilise comme intercalaire dans les vitrages feuilletés. Il peut s'agir de polyvinylbutyral PVB, de polyuréthane PU, d'éthylène vinylacétate EVA.

L'élément absorbant peut être choisi parmi les revêtements absorbants comprenant au moins une couche mince absorbante. Le revêtement absorbant est disposé sur l'une des faces d'un substrat faisant partie du vitrage. L'élément absorbant est alors un substrat comprenant un revêtement absorbant. Le revêtement absorbant peut donc comprendre une superposition de couches minces, dont l'une au moins est absorbante dans le visible.

On entend par couche mince une couche d'épaisseur inférieure à 1 μm. A titre de couche mince absorbante, on peut citer :

- les couches à base d'oxyde de nickel et/ou de fer et/ou de chrome,

- les couches essentiellement métalliques, par exemple à base d'un des métaux suivants : nickel Ni, chrome Cr, alliage Ni-Cr, acier, alliage Inconel, Au ou alliage Au, argent Ag ou alliage Ag, cuivre Cu.

- les couches à base de nitrure(s) métallique(s), du type TiN ou ZrN.

Ces couches absorbantes peuvent être déposées par exemple par une technique de décomposition thermique telle qu'une pyrolyse en phase gazeuse, par une technique sous vide telle qu'une pulvérisation cathodique notamment assistée par champ magnétique ou par sol-gel.

Lorsque l'on utilise un revêtement absorbant dans le visible celui-ci peut être déposé sur l'une quelconque des faces des différents substrats constituant le vitrage. Le substrat comprenant ledit revêtement qui absorbe dans le visible présente l'une ou plusieurs des caractéristiques suivantes :

- une transmission lumineuse d'au moins 50% mesuré selon la norme EN 410,
- une absorption énergétique d'au moins 10% mesuré selon la norme EN 410.

Le ou les revêtements absorbants peuvent faire partie des électrodes encadrant la couche diffusante. L'électrode comprend alors :

- au moins une couche électroconductrice et une couche absorbante, ou
- au moins une couche électroconductrice absorbante.

Selon un mode de réalisation de l'invention, le vitrage comprend au moins substrat absorbant feuilleté grâce à un intercalaire à un substrat porteur d'électrode. De préférence, le vitrage comprend au moins une paire de substrat absorbant feuilletée grâce à des intercalaires à chacun des substrats porteurs d'électrode.

Un vitrage de l'invention peut donc comprendre l'empilement suivant :

- un substrat en verre teinté,

- un intercalaire de feuilletage,

- un substrat constitué d'un verre clair,

- une électrode,

- une couche diffusante,

- une électrode,

- un substrat constitué d'un verre clair,

- un intercalaire de feuilletage,

- un substrat en verre teinté.

Selon un autre mode de réalisation de l'invention, le vitrage comprend au moins un substrat porteur d'électrode qui est un substrat absorbant, c'est-à-dire un substrat absorbant porteur d'électrode. De préférence, le vitrage comprend au moins une paire de substrat absorbant porteur d'électrode.

Le vitrage de l'invention peut donc être constitué de deux substrats en verre teintée et d'un système à diffusion lumineuse variable comprenant deux électrodes et une couche diffusante.

Selon un autre mode de réalisation de l'invention, la ou les électrodes comprennent un revêtement absorbant dans le visible.

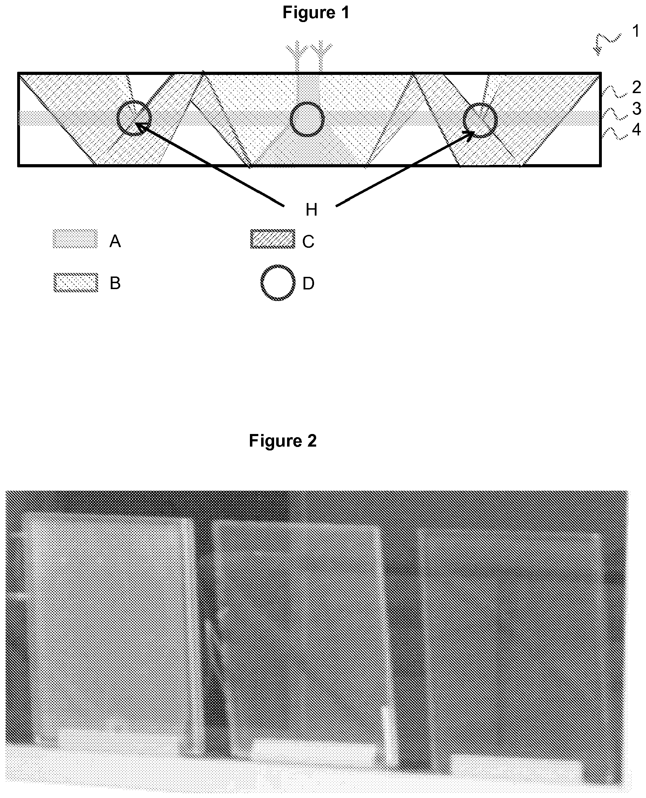

La figure 1 est schéma représentant un vitrage 1 comprenant une couche diffusante 3 comprenant une indicatrice de diffusion large encapsulée entre deux substrats 2 et 4. Les zones référencées A, B, C, D et H représentent respectivement la lumière incidente, la lumière pouvant s'échapper du verre, la lumière piégée par réflexion totale interne, la diffusion de la lumière incidente et le halo.

On constate que la première réflexion diffuse traverse deux fois plus d'épaisseur de substrat que la lumière transmise. Les réflexions supplémentaires traversent un parcours d'épaisseur de substrat encore plus grand et notamment 4 fois plus grand pour le halo. En rajoutant un élément absorbant tel qu'un verre absorbant ou une couche absorbante sur le chemin des rayons, on diminue plus rapidement la réflexion diffuse, qu'il s'agisse du halo de projection ou de la réflexion diffuse à l'état transparent, que la transmission lumineuse à travers le vitrage.

La solution de l'invention permet donc d'améliorer les performances optiques du vitrage sans dégrader significativement la transmission lumineuse. Les vitrages commutables à l'état transparent voient leur réflexion diffuse à grand angle diminuer bien plus vite que ne diminue la transmission lumineuse. Il est possible de profiter de cette baisse de réflexion diffuse pour abaisser également la tension appliquée, en obtenant un résultat pour l'état transparent comparable au vitrage initial, c'est-à-dire sans élément absorbant.

L'invention concerne également l'utilisation d'un vitrage tel que défini ci-dessus comme écran de projection ou de rétroprojection selon laquelle on dispose d'un vitrage tel que défini ci-dessus utilisé comme écran de projection ou de rétroprojection et d'un projecteur, ladite utilisation consistant à projeter grâce au projecteur des images visibles par des spectateurs sur l'un des côtés du vitrage.

Un écran de projection comporte deux faces ou surfaces. Une face principale, sur laquelle est projetée l'image provenant de la source lumineuse, positionnée dans la même région de l'espace que la source lumineuse (projection directe). Une face opposée sur laquelle apparaît éventuellement par transparence l'image projetée sur la face principale.

Les écrans de rétroprojection disposent d'une face principale et d'une face opposée possédant les mêmes caractéristiques que celles des écrans de projection précédemment mentionnés. En revanche, un écran de rétroprojection se différencie d'un écran de projection par le fait que l'utilisateur et la source lumineuse ne sont pas situés dans la même région de l'espace mais se trouvent de part et d'autre de l'écran.

La qualité d'un écran constitué par un vitrage dépend des propriétés de transmission et de réflexion du vitrage. En règle générale, plus la transmission lumineuse est faible, plus la réflexion lumineuse est élevée, meilleure sera la qualité d'un écran utilisé en projection directe. La projection en réflexion est nettement améliorée sur des vitrages diffusants ayant une couche diffusante avec une indicatrice de diffusion large.

De préférence, le vitrage est utilisé comme un écran de projection fonctionnant en réflexion, c'est à dire avec les spectateurs et le projecteur situés du même côté du vitrage utilisé comme écran de projection. Le vitrage peut toutefois être utilisé comme un écran de rétroprojection fonctionnant en transmission, c'est à dire avec les spectateurs et le projecteur situés de chaque côté du vitrage.

Enfin, l'invention concerne également l'utilisation d'un tel vitrage fonctionnant avec une tension de commutation inférieure à 30 Vrms.

Le vitrage selon l'invention peut être utilisé en façade ou comme cloison interne (entre deux pièces ou dans un espace) dans un bâtiment. Plus particulièrement, le vitrage de l'invention est particulièrement utile en tant que cloison interne de salle de réunion pour projeter des présentations. On peut commuter entre l'état transparent et l'état diffus.

Le vitrage selon l'invention est susceptible d'être utilisé pour toutes applications connues de vitrages, telles que pour véhicules, bâtiments, mobilier urbain, ameublement intérieur, éclairage, écrans d'affichage. Le vitrage transparent de l'invention peut donc être utilisé en façade, en fenêtre, en cloison intérieure utilisable en écran de projection pour des salles de réunion ou des vitrines. Le vitrage peut également être utilisé pour de la muséographie ou de la publicité sur lieu de vente comme support publicitaire.

**Exemple**

**I. Matériaux utilisés**

**1. Substrats et intercalaires**

Les substrats transparents utilisés sont des verres Planilux® commercialisés par la société Saint-Gobain. Ces substrats ont une épaisseur de 4 mm.

Les substrats absorbants dans le visible sont des verres Parsol® Bronze commercialisés par la société Saint-Gobain présentant une épaisseur de 4 mm, une transmission lumineuse de 60 % et une absorption énergétique de 34 %.

Les revêtements absorbants dans le visible utilisés, au préalable déposés sur des substrats en verre plat de 6 mm d'épaisseur sont les suivants :

- un empilement comprenant une couche à base d'argent référencée KN 169 chez Saint-Gobain présentant lorsqu'elle est déposée sur le substrat une transmission lumineuse TL de 69 % et une absorption lumineuse d'au moins 30 %,

- un empilement comprenant une couche à base d'acier inoxydable référencée SKN 144 chez Saint-Gobain présentant lorsqu'elle est déposée sur le substrat une transmission lumineuse TL de 44 % et une absorption lumineuse d'au moins 30 %.

Ces substrats peuvent être feuilletés en utilisant par exemple un intercalaire en PVB ou en EVA.

**2. Systèmes à diffusion lumineuse variable (SDLV) et vitrages**

Un film fonctionnel commercialisé par la société NSG sous la dénomination « UMU FILM » a été utilisé. Ce film comprend deux feuilles de PET chacune porteuse d'électrode constituée d'une couche d'ITO d'environ 50 nm et de résistance environ 100 ohms par carré et une couche de cristaux liquides de type NCAP. L'ensemble constitué de la couche NCAP et des deux électrodes est appelé SDLVA. D'après les informations disponibles sur ce film fonctionnel, la couche de cristaux liquides est obtenue selon la technologie NCAP et comprend des gouttelettes de cristaux liquides présentant un diamètre d'environ 5 $\mu$m.

Le SDLVB comprend une couche PDLC obtenue par séparation de phase induite par polymérisation radicalaire aux UV à partir du mélange de cristaux liquides commercialisé par la société Merck sous la référence MDA-00-3506 et d'une composition photopolymérisable en présence d'espaceur. La composition photopolymérisable est obtenue à partir du produit MXM 035 commercialisé par Nematel®. Ce produit en deux parties A et B comprend :

- un mélange de deux monomères acrylates, l'éthylhexylacrylate et l'hexanediol diacrylate et d'oligomères acrylates (partie B),
- un mercaptan (partie A),
- un photoinitiateur pour sa polymérisation aux UV (partie A).

Les espaceurs sont des billes commercialisées sous la dénomination Sekisui Micropearl de 15 $\mu$m de diamètre moyen.

Le SDLVB est placé entre deux substrats en verre. Pour obtenir les vitrages incorporant le SDLVB, on réalise les étapes suivantes :

- une couche d'ITO d'environ 50 nm et de résistance environ 100 ohms par carré est déposée par procédé magnétron sur un substrat en verre Planilux® ou Parsol® pour former un substrat porteur d'électrode,
- un joint de scellement à base d'une colle acrylate est appliqué en bordure du substrat en verre,
- la composition précurseur de la couche PDLC comprenant la composition photopolymérisable, le mélange de cristaux liquides et les espaceurs est déposée sur une électrode portée par un substrat,
- un deuxième substrat revêtu d'une électrode est déposé sur le premier substrat avec les deux couches conductrices des électrodes se faisant face et séparées par la couche de composition précurseur de la couche PDLC,
- les deux verres sont pressés ensembles,
- l'ensemble est insolé avec des rayons UV.

| Couche Diffusante | SDLVA | SDLVB |
|---|---|---|
| Technologie | NCAP | PDLC |
| Type de cristaux liquides | Nématique | Nématique |
| Dimension moyennes des gouttelettes ($\mu$m) | 5 | 0,74 |
| Nature du polymère | Pas d'indication | acrylate |
| Proportions de mélange de cristaux liquides | Pas d'indication | 50-55 % |
| Epaisseur de la couche | Pas d'indication | 15 $\mu$m |

## II. Description des vitrages

| Empilement | Comp.1 | Inv.0 | Inv.1 | Inv.2 | Inv.3 | Inv.4 |
|---|---|---|---|---|---|---|
| Substrat/Couche | Planilux | - | Parsol | - | KN169 | SKN144 |
| Intercalaire | EVA | - | PVB | - | PVB | PVB |
| Substrat/Couche | PET | Planilux | Planilux | Parsol | Planilux | Planilux |
| SDLV | SDLVA | SDLVB | SDLVB | SDLVB | SDLVB | SDLVB |
| substrat | PET | Planilux | Planilux | Parsol | Planilux | Planilux |
| Intercalaire | EVA | - | PVB | - | PVB | PVB |
| Substrat/couche | Planilux | - | Parsol | - | KN169 | SKN144 |
| TL % | 75% | 84,8% | 36,3% | 37,3% | 48% | 19% |

## III. Détermination des indicatrices de diffusion en transmission

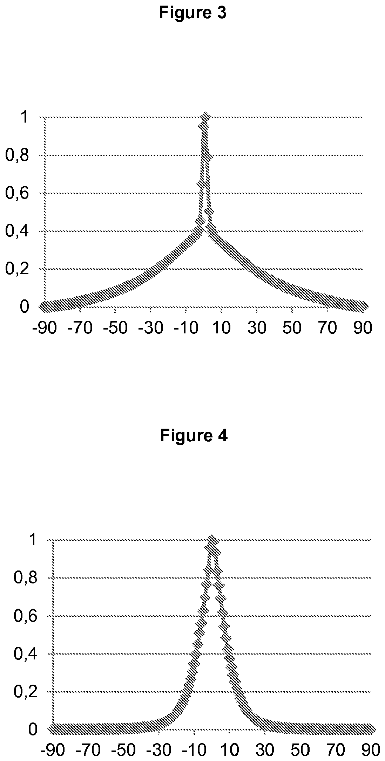

Les figures 3 et 4 représentent respectivement les indicatrices de diffusion des vitrages Inv.0 et Comp.1 incorporant les systèmes à diffusion lumineuse variable SDLVB et SDLVA. Ces indicatrices représentent en fonction de l'angle de diffusion compris entre -90 ° à 90 ° l'intensité de la lumière transmise (normalisée entre 0 et 1). Ces profils ont été mesurés en utilisant le banc de mesure REFLET commercialisé par la société STIL.

La figure 3 correspond à l'indicatrice de diffusion d'un vitrage développé par SAINT-GOBAIN (Inv. 0) comprenant le SDLVB placé entre deux verres Planilux® eux-mêmes feuilletés entre deux verres Parsol®. L'indicatrice de diffusion en transmission pour le vitrage Inv. 0 présente :

- un pic pointu au centre correspondant à la partie des rayons les moins défléchis,

- une courbe en cloche en-dessous du pic correspondant à la grande partie des rayons diffusée à de grands angles.

Ainsi, toute la gamme d'angle est explorée, des rayons émergent du substrat avec des angles allant jusqu'à 90°. On constate donc que pour le vitrage Inv.0 comprenant une couche diffusant la lumière incidente selon des angles de diffusion supérieurs à l'angle critique de réflexion totale interne à l'interface entre le substrat et l'air ($\theta$c est d'environ 40°), une partie des rayons ne peut sortir du fait de la réflexion totale interne.

La figure 4 correspond à l'indicatrice de diffusion du vitrage Comp. 1 comprenant le système SDLVA compris entre des feuilles de PET, le tout feuilleté entre deux verres Planilux®. L'indicatrice de diffusion en transmission pour le vitrage comp. 1 est bien plus pointue. Les rayons ne vont pas au-delà de 40 ° dans l'air. Cela signifie que les rayons diffusés pour la couche diffusante arrivent à l'interface verre/air avec un angle incident au maximum de 25 ° soit un angle d'incidence inférieur à l'angle critique de réflexion totale interne à l'interface entre le substrat et l'air d'environ 40 °. Le phénomène de réflexion diffuse n'est pas observé pour ces vitrages mais le pouvoir cachant est moindre.

### IV. Evaluation de la qualité des écrans

### 1. Appréciation de l'aspect visuel à l'état ON

L'amélioration de l'aspect visuel à l'état ON (transparent) des vitrages a été apprécié. Un panel de plusieurs personnes a apprécié visuellement la réflexion diffuse de plusieurs vitrages se traduisant par la présence ou non d'un voile blanc ou halo lumineux. Ces vitrages sont observés sous un angle compris entre 50 ° et 60 °. Le panel a attribué pour chaque vitrage un indicateur d'appréciation choisi parmi :

«-» présence d'un voile blanc marqué traduisant une forte réflexion diffuse,
«0» léger voile blanc traduisant une faible réflexion diffuse,
«+» absence de voile blanc traduisant l'absence de réflexion diffuse visible.

| Indicateur d'appréciation | |
|---|---|
| Inv.0 | - |
| Comp. 1 | + |
| Inv. 1 | + |
| Inv.3 | + |
| Inv.4 | + |

La figure 2 représente une photographie des vitrages suivants (de gauche à droite) : Inv. 0, Comp.1 et Inv.2. La réflexion diffuse est très visible pour le vitrage Inv.0 comprenant une couche diffusant la lumière incidente selon des angles de diffusion supérieurs à l'angle critique de réflexion totale interne à l'interface entre le substrat et l'air et ne comprenant pas d'élément absorbant. En comparaison, pour le vitrage selon l'invention Inv.1 comprenant en outre deux substrats absorbants, le panel n'observe pas de voile blanc et donc pas de réflexion diffuse. La coloration ou teinte pour le vitrage Inv.1 vient du fait que le verre PARSOL® est coloré en plus d'être simplement absorbant mais cela n'est pas nécessaire et un vitrage absorbant neutre produirait le même effet.

Enfin, en comparant le vitrage Comp.1 comprenant une couche ne diffusant pas la lumière incidente selon des angles de diffusion supérieurs à l'angle critique de réflexion totale interne à l'interface entre le substrat et l'air et le vitrage de l'invention Inv. 1, on observe de manière surprenante de meilleurs résultats en termes d'absence de réflexion diffuse pour le vitrage selon l'invention Inv.1.

Les vitrages Inv.3 et Inv.4 comprenant respectivement un substrat comprenant un revêtement absorbant KN 169 présentant une TL de 69 % et un revêtement absorbant SKN 144 présentant une TL de 44 % ont une teinte plus neutre que le vitrage Inv.1. L'effet de réduction de la réflexion diffuse est toujours clairement présent et efficace.

### 2. Mesure quantitative de la qualité de l'état transparent des vitrages

| | Tension : 30 V | | Tension : 12 V | |
|---|---|---|---|---|
| | Inv.0 | Inv.1 | Inv.0 | Inv.1 |
| **Transmission à 0°** | 100% | 43% | 99% | 40% |
| **Réflexion diffuse à 0°** | 100% | 21% | 163% | 35% |
| **Rapport Trans./Ref. Diffuse à 0°** | 1,00 | 2,07 | 0,61 | 1,14 |
| **Amélioration à 0°** | 0% | +107% | -39% | +14% |
| **Réflexion diffuse à 30°** | 218% | 26% | 351% | 32% |
| **Rapport Trans./Ref. Diffuse à 30°** | 0,46 | 1,66 | 0,28 | 1,24 |
| **Amélioration à 30°** | 0% | +263% | -39% | +171% |

Les valeurs de transmission et de réflexion diffuse ont été réalisées à l'état ON en appliquant des tensions de 30 Vrms correspondant à la tension nominale et de 12 Vrms correspondant à une basse tension idéale pour salle de bain, l'alimentation étant faite par une tension alternative à 50Hz. Ces valeurs de transmission et de réflexion diffuse ont été réalisées à 0 ° et à 30 ° par rapport à la normale au vitrage.

Dans le tableau, la valeur de la réflexion diffuse et de la transmission du vitrage Inv.0 sont prises à 100% par convention, les autres valeurs étant ainsi normalisées à celles-ci.

Le rapport entre la transmission lumineuse et la réflexion lumineuse est considéré comme figure de mérite de l'esthétique du vitrage. Enfin, l'amélioration est le rapport entre cette figure de mérite par rapport à celle du vitrage Inv.0 à 30 Vrms et donc l'amélioration par rapport à celui-ci.

A 0 °, c'est-à-dire en face :

- pour une tension appliquée de 30 Vrms, la performance du vitrage Inv. 1 est 2 fois meilleure que celle du vitrage Inv. 0,
- la performance du vitrage Inv.1 à 12 V est comparable voire supérieure à celle du vitrage Inv.0 à 30 V.

Au passage à 30 °, la performance du vitrage Inv.0 chute drastiquement par rapport à 0 °. Ce n'est pas le cas pour le vitrage avec verre absorbant Inv.1, qui maintient une performance quasi-constante entre 30 ° et 0 °

Ainsi, l'invention permet à la fois de maintenir le niveau de performance du vitrage en baissant la tension à 12 V, et de maintenir cette bonne performance y compris en angle.

**3. Appréciation en tant qu'écran de projection**

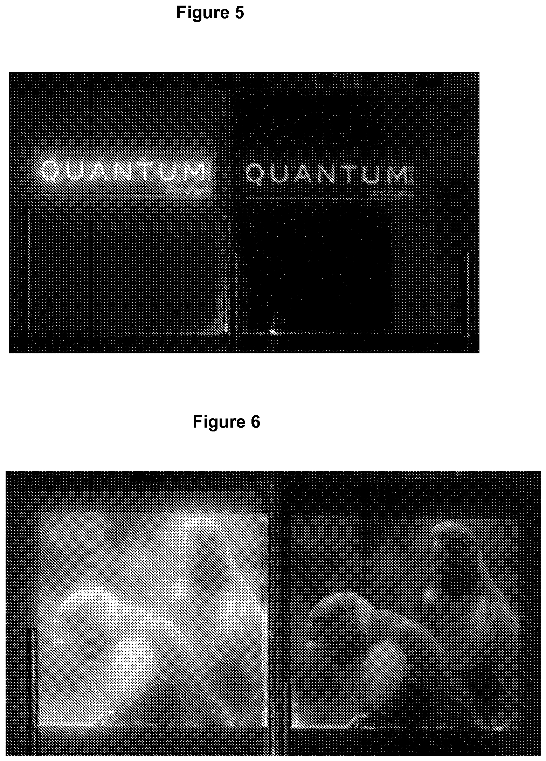

Un panel de plusieurs personnes a apprécié visuellement la réflexion diffuse de vitrages se traduisant par la présence ou non d'un voile blanc ou halo lumineux lorsqu'une image est projetée en projection directe. L'image projetée évaluée par le panel a été photographié et fait l'objet des figures 5 et 6 comparant chacune la projection directe sur un vitrage selon Inv.0 (à gauche) par rapport à un vitrage selon l'invention Inv.1 (à droite). Le panel a attribué pour chaque image projetée sur un vitrage un indicateur d'appréciation choisi parmi :

«-» présence d'un voile blanc ou halo marqué traduisant une forte réflexion diffuse,
«0» léger voile blanc traduisant une faible réflexion diffuse,
«+» absence de voile blanc traduisant l'absence de réflexion diffuse visible.

| Indicateur d'appréciation | |
|---|---|
| Inv.0 | - |
| Inv. 1 | + |

Tandis que le halo est clairement présent pour le vitrage Inv.0 et ne permet pas d'obtenir une qualité d'image acceptable, celui-ci est absent dans le vitrage feuilleté avec le verre absorbant Inv.1. En revanche, il est clair que la luminosité globale de l'image est diminuée. Cela est bien sûr attendu, mais la diminution du halo est réalisée de manière bien plus importante encore.

**Revendications**

1. Vitrage comprenant un système à diffusion lumineuse variable commutant entre un état transparent et un état translucide comprenant une couche diffusante située entre deux électrodes, ladite couche diffusante comprenant un mélange de cristaux liquides formant des micro-gouttelettes dispersées dans une matrice polymère, ledit système à diffusion lumineuse variable étant situé entre deux substrats porteurs desdites électrodes **caractérisé en ce que** :

   - les micro-gouttelettes de cristaux liquides présentent une dimension moyenne strictement inférieure à 4 $\mu$m,
   - le vitrage comprend au moins une paire d'éléments absorbants la lumière visible séparés au moins par la couche diffusante, les éléments absorbants sont des substrats absorbants choisis parmi :

      - les substrats teintés dans la masse,
      - les substrats comprenant un revêtement absorbant comprenant au moins une couche mince absorbante,

      - lesdits substrats absorbants présentant :

         - une transmission lumineuse d'au moins 50%, et/ou
         - une absorption énergétique d'au moins 10%.

2. Vitrage selon la revendication précédente, **caractérisé en ce que** le vitrage présente une absorption énergétique supérieure à 10 %.

3. Vitrage selon l'une quelconque des revendications précédentes **caractérisé en ce que** les éléments absorbants d'une même paire sont identiques.

4. Vitrage selon l'une quelconque des revendications précédentes **caractérisé en ce qu'**il présente une symétrie par rapport au système à diffusion lumineuse variable et/ou à la couche diffusante.

5. Vitrage selon l'une quelconque des revendications précédentes **caractérisé en ce que** la couche diffusante a une épaisseur comprise entre 5 et 25 $\mu$m.

6. Vitrage selon l'une quelconque des revendications précédentes **caractérisé en ce que** les microgouttelettes de cristaux liquides ont une dimension moyenne comprise entre 0,25 et 3,00 $\mu$m.

7. Vitrage selon l'une quelconque des revendications précédentes **caractérisé en ce que** les microgouttelettes de cristaux liquides ont une dimension moyenne comprise entre 0,25 et 1,00 $\mu$m.

8. Vitrage selon l'une quelconque des revendications précédentes **caractérisé en ce que** la matrice polymère est obtenue à partir d'une composition photopolymérisable comprenant des composés vinyliques.

9. Vitrage selon l'une quelconque des revendications précédentes **caractérisé en ce que** la couche diffusante est une couche PDLC satisfaisant les caractéristiques suivantes :

   - la matrice polymère est obtenue à partir d'une composition photopolymérisable comprenant des composés vinyliques choisis parmi les composés acrylates ou méthacrylates,
   - les proportions en masse du mélange de cristaux liquides par rapport à la masse totale du mélange de cristaux liquides et de composition photopolymérisable sont comprises entre 40 et 70%,
   - la couche PDLC a une épaisseur comprise entre 5 et 25 $\mu$m,
   - le diamètre moyen des gouttelettes de cristaux liquides dispersées dans la matrice polymère est compris entre 0,25 $\mu$m et 2,00 $\mu$m.

10. Vitrage selon l'une quelconque des revendications précédentes **caractérisé en ce que** les substrats porteurs d'électrode sont des substrats en verre.

11. Vitrage selon l'une quelconque des revendications précédentes **caractérisé en ce que** l'élément absorbant est un substrat absorbant et/ou un revêtement absorbant.

12. Vitrage selon l'une quelconque des revendications précédentes **caractérisé en ce qu'**il comprend au moins substrat absorbant feuilleté grâce à un intercalaire à un substrat porteur d'électrode.

**13.** Vitrage selon l'une quelconque des revendications précédentes **caractérisé en ce qu'**il comprend au moins une paire de substrat absorbant feuilletée grâce à des intercalaires à chacun des substrats porteurs d'électrode.

**14.** Vitrage selon l'une quelconque des revendications précédentes **caractérisé en ce qu'**il comprend au moins substrat absorbant porteur d'électrode.

**15.** Vitrage selon l'une quelconque des revendications précédentes **caractérisé en ce qu'**il comprend au moins une paire de substrat absorbant porteur d'électrode.

**16.** Vitrage selon l'une quelconque des revendications précédentes caractérisé ce que la ou les électrodes comprennent un revêtement absorbant dans le visible.

**17.** Vitrage selon l'une quelconque des revendications précédentes **caractérisé en ce qu'**il comprend l'empilement suivant :

- un substrat absorbant en verre teinté,
- un intercalaire de feuilletage,
- un substrat constitué d'un verre clair,
- une électrode,
- une couche diffusante,
- une électrode,
- un substrat constitué d'un verre clair,
- un intercalaire de feuilletage,
- un substrat absorbant en verre teinté.

**18.** Vitrage selon l'une quelconque des revendications précédentes **caractérisé en ce qu'**il est constitué de deux substrats absorbants en verre teintée et d'un système à diffusion lumineuse variable comprenant deux électrodes et une couche diffusante.

**19.** Utilisation d'un vitrage selon l'une quelconque des revendications 1 à 18 comme écran de projection ou de rétroprojection.

**Patentansprüche**

**1.** Verglasung mit einem veränderlichen Lichtstreuungssystem, das zwischen einem transparenten Zustand und einem transluziden Zustand umschaltet, umfassend eine streuende Schicht, die sich zwischen zwei Elektroden befindet, wobei die streuende Schicht ein Flüssigkristallgemisch umfasst, das in einer Polymermatrix dispergierte Mikrotröpfchen bildet, wobei sich das veränderliche Lichtstreuungssystem zwischen zwei elektrodentragenden Substraten befindet, **dadurch gekennzeichnet, dass**:

- die Flüssigkristallmikrotröpfchen eine mittlere Größe von strikt kleiner als 4 $\mu$m aufweisen,
- die Verglasung mindestens ein Paar Absorber sichtbaren Lichts umfasst, die mindestens durch die streuende Schicht getrennt sind, wobei die Absorber absorbierende Substrate sind, die ausgewählt sind aus:

- massengefärbten Substraten,
- Substraten, die eine absorbierende Beschichtung umfassen, umfassend mindestens eine absorbierende Dünnschicht,

- wobei die absorbierenden Substrate Folgendes aufweisen:

- eine Lichtdurchlässigkeit von mindestens 50 %, und/oder
- eine Energieabsorption von mindestens 10 %.

**2.** Verglasung nach dem vorhergehenden Anspruch, **dadurch gekennzeichnet, dass** die Verglasung eine Energieabsorption von mehr als 10 % aufweist.

**3.** Verglasung nach einem der vorhergehenden Ansprüche, **dadurch gekennzeichnet, dass** die Absorber desselben Paares identisch sind.

**4.** Verglasung nach einem der vorhergehenden Ansprüche, **dadurch gekennzeichnet, dass** sie eine Symmetrie in Bezug auf das veränderliche Lichtstreuungssystem und/oder die streuende Schicht aufweist.

**5.** Verglasung nach einem der vorhergehenden Ansprüche, **dadurch gekennzeichnet, dass** die streuende Schicht eine Dicke hat, die zwischen 5 und 25 $\mu$m liegt.

**6.** Verglasung nach einem der vorhergehenden Ansprüche, **dadurch gekennzeichnet, dass** die Flüssigkristallmikrotröpfchen eine mittlere Größe haben, die zwischen 0,25 und 3,00 $\mu$m liegt.

**7.** Verglasung nach einem der vorhergehenden Ansprüche, **dadurch gekennzeichnet, dass** die Flüssigkristallmikrotröpfchen eine mittlere Größe haben, die zwischen 0,25 und 1,00 $\mu$m liegt.

**8.** Verglasung nach einem der vorhergehenden Ansprüche, **dadurch gekennzeichnet, dass** die Polymermatrix aus einer photopolymerisierbaren Zusammensetzung erhalten wird, die Vinylverbindungen umfasst.

**9.** Verglasung nach einem der vorhergehenden Ansprüche, **dadurch gekennzeichnet, dass** die streuende Schicht eine PDLC-Schicht ist, die die folgenden Merkmale erfüllt:

- die Polymermatrix wird aus einer photopolymerisierbaren Zusammensetzung erhalten, die Vinylverbindungen umfasst, die aus Acrylat- oder Methacrylatverbindungen ausgewählt sind,
- die Massenanteile des Flüssigkristallgemischs in Bezug auf die Gesamtmasse des Flüssigkristallgemischs und der photopolymerisierbaren Zusammensetzung liegen zwischen 40 und 70 %,
- die PDLC-Schicht hat eine Dicke, die zwischen 5 und 25 $\mu$m liegt,
- der mittlere Durchmesser der in der Polymermatrix dispergierten Flüssigkristall-Tröpfchen liegt zwischen 0,25 $\mu$m und 2,00 $\mu$m.

**10.** Verglasung nach einem der vorhergehenden Ansprüche, **dadurch gekennzeichnet, dass** die elektrodentragenden Substrate Glassubstrate sind.

**11.** Verglasung nach einem der vorhergehenden Ansprüche, **dadurch gekennzeichnet, dass** der Absorber ein absorbierendes Substrat und/oder eine absorbierende Beschichtung ist.

**12.** Verglasung nach einem der vorhergehenden Ansprüche, **dadurch gekennzeichnet, dass** sie dank einer Zwischenschicht zu einem elektrodentragenden Substrat mindestens ein absorbierendes Verbundsubstrat umfasst.

**13.** Verglasung nach einem der vorhergehenden Ansprüche, **dadurch gekennzeichnet, dass** sie dank Zwischenschichten zu jedem der elektrodentragenden Substrate mindestens ein Paar eines absorbierenden Verbundsubstrats umfasst.

**14.** Verglasung nach einem der vorhergehenden Ansprüche, **dadurch gekennzeichnet, dass** sie mindestens ein elektrodentragendes absorbierendes Substrat umfasst.

**15.** Verglasung nach einem der vorhergehenden Ansprüche, **dadurch gekennzeichnet, dass** sie mindestens ein Paar eines elektrodentragenden absorbierenden Substrats umfasst.

**16.** Verglasung nach einem der vorhergehenden Ansprüche, **dadurch gekennzeichnet, dass** die Elektrode(n) eine im sichtbaren Bereich absorbierende Beschichtung umfassen.

**17.** Verglasung nach einem der vorhergehenden Ansprüche, **dadurch gekennzeichnet, dass** sie den folgenden Stapel umfasst:

- ein absorbierendes Substrat aus getöntem Glas,
- eine Laminierungszwischenschicht,
- ein Substrat, bestehend aus Klarglas,
- eine Elektrode,

- eine streuende Schicht,
- eine Elektrode,
- ein Substrat, bestehend aus Klarglas,
- eine Laminierungszwischenschicht,
- ein absorbierendes Substrat aus getöntem Glas.

18. Verglasung nach einem der vorhergehenden Ansprüche, **dadurch gekennzeichnet, dass** sie aus zwei absorbierenden Substraten aus getöntem Glas und einem veränderlichen Lichtstreuungssystem besteht, das zwei Elektroden und eine streuende Schicht umfasst.

19. Verwendung einer Verglasung nach einem der Ansprüche 1 bis 18 als Projektions- oder Rückprojektionsschirm.

**Claims**

1. A glazing unit comprising a variable light scattering system switching between a transparent state and a translucent state comprising a scattering layer situated between two electrodes, said scattering layer comprising a mixture of liquid crystals forming micro-drops dispersed within a polymer matrix, said variable light scattering system being situated between two substrates carrying said electrodes **characterized in that**:

   - the micro-drops of liquid crystals have mean dimensions strictly less than 4 $\mu$m,
   - the glazing unit comprises at least one pair of elements absorbing visible light separated separated at least by the scattering layer, the absorbing elements are absorbing substrates chosen from amongst:

       - substrates tinted in the bulk,
       - substrates comprising an absorbing coating comprising at least one absorbing thin film,

   - said absorbing substrates having:

       - a light transmission of at least 50%, and/or
       - an energy absorption of at least 10%.

2. The glazing unit as claimed in claim 1 **characterized in that** the glazing unit exhibits an energy absorption greater than 10%.

3. The glazing unit as claimed in any one of the preceding claims **characterized in that** the absorbing elements of a same pair are identical.

4. The glazing unit as claimed in any one of the preceding claims **characterized in that** it exhibits a symmetry with respect to the variable light scattering system and/or to the scattering layer.

5. The glazing unit as claimed in any one of the preceding claims **characterized in that** the scattering layer has a thickness in the range between 5 and 25 $\mu$m.

6. The glazing unit as claimed in any one of the preceding claims **characterized in that** the micro-drops of liquid crystals have mean dimensions in the range between 0.25 and 3.00 $\mu$m.

7. The glazing unit as claimed in any one of the preceding claims **characterized in that** the micro-drops of liquid crystals have mean dimensions in the range between 0.25 and 1.00 $\mu$m.

8. The glazing unit as claimed in any one of the preceding claims **characterized in that** the polymer matrix is obtained starting from a photopolymerizable composition comprising vinyl compounds.

9. The glazing unit as claimed in any one of the preceding claims **characterized in that** the scattering layer is a PDLC layer satisfying the following characteristics:

   - the polymer matrix is obtained starting from a photopolymerizable composition comprising vinyl compounds chosen from amongst the acrylate or methacrylate compounds,

- the proportions by mass of the mixture of liquid crystals with respect to the total mass of the mixture of liquid crystals and of photopolymerizable composition are in the range between 40 and 70%,
- the PDLC layer has a thickness in the range between 5 and 25 $\mu$m,
- the mean diameter of the drops of liquid crystals dispersed within the polymer matrix is in the range between 0.25 $\mu$m and 2.00 $\mu$m.

10. The glazing unit as claimed in any one of the preceding claims **characterized in that** the electrode carrier substrates are glass substrates.

11. The glazing unit as claimed in any one of the preceding claims **characterized in that** the absorbing element is an absorbing substrate and/or an absorbing coating.

12. The glazing unit as claimed in any one of the preceding claims **characterized in that** it comprises at least one absorbing substrate laminated by means of an interlayer spacer to an electrode carrier substrate.

13. The glazing unit as claimed in the preceding claims **characterized in that** it comprises at least one pair of absorbing substrates laminated by means of interlayer spacers to each of the electrode carrier substrates.

14. The glazing unit as claimed in any one of the preceding claims **characterized in that** it comprises at least one absorbing electrode carrier substrate.

15. The glazing unit as claimed in the preceding claims **characterized in that** it comprises at least one pair of absorbing electrode carrier substrates.

16. The glazing unit as claimed in any one of the preceding claims **characterized in that** the electrode or electrodes comprise a coating absorbing in the visible.

17. The glazing unit as claimed in any one of the preceding claims **characterized in that** it comprises the following multilayer:

> - an absorbing substrate made of tinted glass,
> - a lamination interlayer spacer,
> - a substrate composed of a clear glass,
> - an electrode,
> - a scattering layer,
> - an electrode,
> - a substrate composed of a clear glass,
> - a lamination interlayer spacer,
> - an absorbng substrate made of tinted glass.

18. The glazing unit as claimed in any one of the preceding claims **characterized in that** it is composed of two absorbing substrates made of tinted glass and of a variable light scattering system comprising two electrodes and a scattering layer.

19. The use of a glazing unit as claimed in any one of claims 1 to 18 as a projection or back-projection screen.

**Figure 1**

| | |
|---|---|
| A | C |
| B | D |

**Figure 2**

**Figure 3**

**Figure 4**

**Figure 5**

**Figure 6**

**EP 2 915 005 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012028823 A
- WO 2012045973 A
- EP 0564869 A
- EP 0598086 A
- EP 0272585 A
- US 4891152 A